# EUROPEAN PATENT SPECIFICATION

(11) **EP 0 484 077 B1**
(45) Date of publication and mention of the grant of the patent: **16.02.1994**
(21) Application number: 91309928.9
(22) Date of filing: 28.10.1991
(51) Int. Cl.: H02K 11/00, H02K 17/30

(54) **Protector for compressor motor**
Schutzvorrichtung für Kompressormotor
Dispositif de protection pour moteur de compresseur

(30) Priority: 01.11.1990 US 608127
(43) Date of publication of application: 06.05.1992
(73) Proprietor: TEXAS INSTRUMENTS INCORPORATED, Dallas Texas 75265 (US)
(72) Inventor: D'Entremont, John R., Foxboro, MA 02035 (US); Nield, Joseph G., Cumberland, RI 02864 (US)
(74) Representative: Abbott, David John

(56) References cited:
- EP-A- 0 194 892
- EP-A- 0 194 892
- GB-A- 2 133 630
- US-A- 4 225 210
- US-A- 4 241 370
- US-A- 4 791 329

## Description

### Background of the Invention

### Field of the Invention

This invention relates to single phase motors having an auxiliary or start winding and a main winding.

### Brief Description of the Prior Art

Air conditioning apparatus include hermetically sealed compressors typically powered by single phase electric motors. The motors are disposed within the compressor shell and electrically energized through pins mounted to extend through a glass header placed in the wall of the compressor shell. The motors are generally provided with a winding circuit which includes a main winding and an auxiliary or start winding connected in parallel with the main winding. During motor starting and running both the main winding and the start winding are connected across the motor power source to magnetically excite the rotor and cause rotation thereof.

It is conventional to place a capacitor in series with the start winding to alter the phase angle and achieve desired starting torque and running efficiency. The capacitor is connected outside the compressor shell to appropriate pins.

Although it is known to place a motor protector within the compressor shell which provides certain advantages, such as being more responsive to motor winding temperature, it is most frequently preferred to place the protector outside the compressor shell, electrically interposing it between one line and the common pin because it is less expensive and doing so facilitates field servicing.

The European Patent Application published under the number EP 0 194 892 discloses a compressor motor protector for mounting outside the compressor shell on a three-pin seal in that shell. The motor protector has a clip for mounting it on one of the pins which also serves as an electrical connection to that pin.

United States Patent No. 4 791 329 discloses the mounting of a compressor motor protector inside the shell of the compressor in which the motor compressor has a female receptacle for a spade connector welded to it so that the motor protector can be mounted on a spade connector welded to the internal end of a pin sealed in the compressor shell.

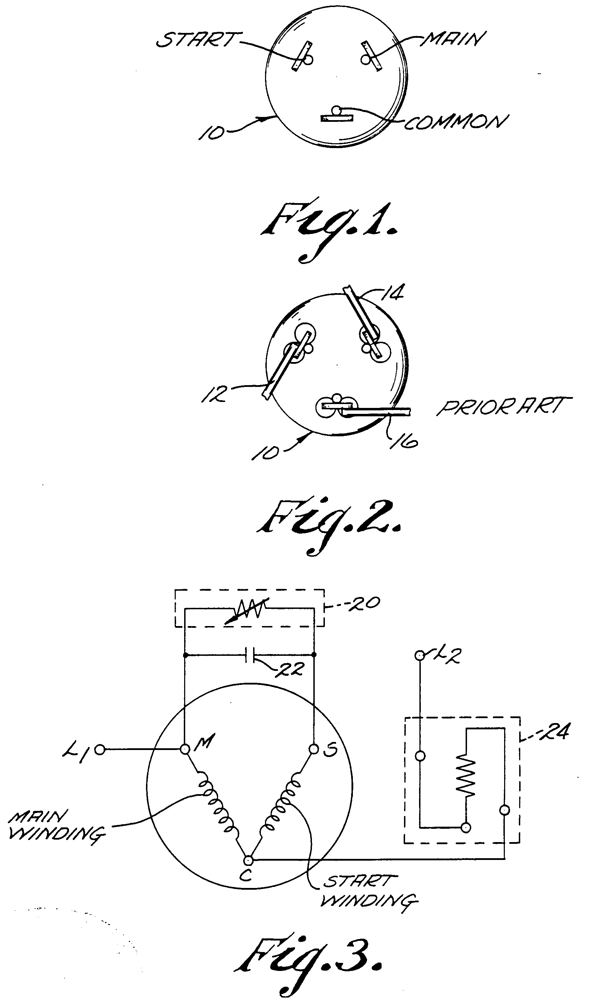

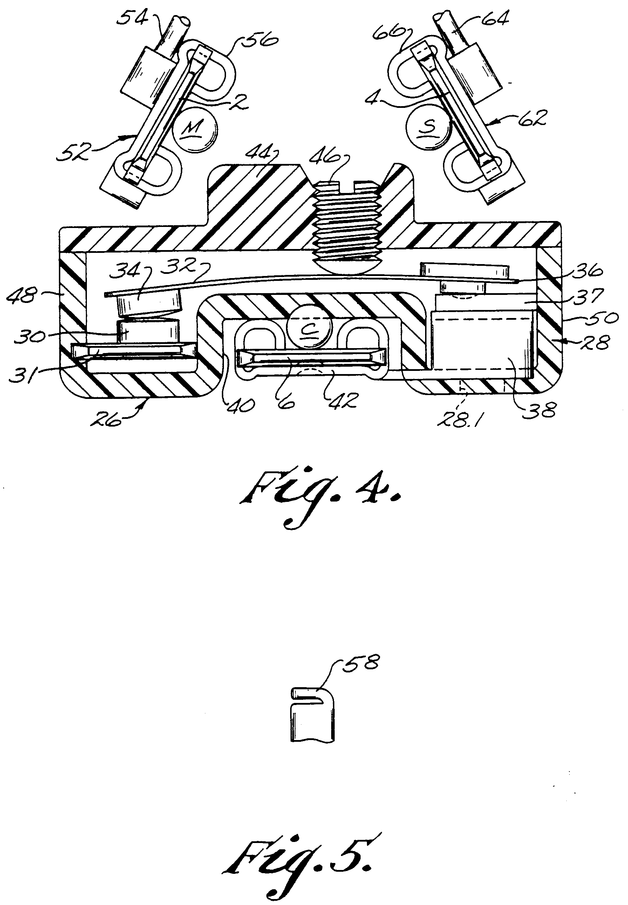

A typical room air conditioning compressor is provided with a glass header arrangement as shown in Fig. 1 having three electrical terminal pins, start, main and common equidistantly spaced from one another. Male spade connectors are welded to the pins to facilitate connection to wire leads by conventional female flag quick connectors as shown in Fig. 2.

This arrangement, while being conducive to easy assembly, permits placement of wire leads on the terminal pins in an incorrect sequence which can result in malfunction of the motor. Improper wiring connections are very undesirable, particularly with rotary compressors.

It is an object of the present invention to provide structure which prevents miswiring. Another object of the invention is the provision of a simple, inexpensive yet reliable apparatus which will ensure that correct wiring connections are made to the electrical terminal pins of a compressor motor.

According to one aspect of the present invention there is provided a single phase motor hermetically sealed inside compressor housing having a header mounted in a wall of the housing, with first, second and third terminal pins for providing electrical connection to the motor mounted in the header so as to be equidistant from one another and forming an imaginary triangle, the pins extending from inside to outside the housing, inside the housing the first pin being connected to the start winding of the motor, the second pin being connected to the main winding of the motor and the third pin being connected to common, a spade terminal welded to each pin outside the housing, and a motor protector having a housing and having a spade receiving terminal, characterized in that the motor protector is adapted to be mounted on the header with the spade terminal connected to the third pin received in the spade receiving terminal with the housing extending from the third pin towards the first and second pins and occupying a majority of the space defined by the imaginary triangle and first and second spade receiving quick connectors, each connector having a channel like opening that is opened at the bottom only fo reception of a spade terminal and a wire lead connected thereto and extending generally laterally from a side thereof and generally perpendicularly to the longitudinal axis of the pin, the connectors having their leads extending in mirror image to one another to provide polarized right and left orientated connectors, whereby when the motor protector is received on the third pin the first spade receiving quick connector is receivable on only a particular one of the first and second pins and the second spade receiving quick connector is receivable on only the other of the first and second pins.

According to another aspect of the present invention there is provided a single phase motor hermetically sealed inside compressor housing having a header mounted in a wall of the housing, with first, second and third terminal pins for providing electrical connection to the motor mounted in the header so as to be equidistant from one another and forming an imaginary triangle, the pins extending from inside to outside the housing, inside the housing the first pin being connected to the start winding of the motor, the second pin being connected to the main winding of the motor and the third pin being connected to common, a spade terminal welded to each pin outside the housing, the spade terminals each lying in a plane with the planes intersecting one another and with the header to form an equilateral triangle on a surface of the header and a motor protector having a housing and having a spade receiving terminal, characterized in that the motor protector is adapted to be mounted on the header with the spade terminal connected to the third pin received in the spade receiving terminal of the protector, the protector also having a pair of protrusions extending from the housing towards the first and second pins respectively, intersecting the planes in which the spade terminals attached to the first and second pins lie, and first and second spade receiving quick connectors, each connector having a channel like opening that is opened at the bottom only for reception of a spade terminal and a wire lead connected thereto and extending generally laterally from a side thereof and generally perpendicularly to the longitudinal axis of the pin, the connectors having their leads extending in mirror image to one another to provide polarized right and left orientated connectors, whereby when the motor protector is received on the third pin the first spade receiving quick connector is receivable on only a particular one of the first and second pins and the second spade receiving quick connector is receivable on only the other of the first and second pins.

In a first embodiment of the invention a keyed plug on the motor protector is received on the common terminal pin with the motor protector housing occupying the majority of the space which the pins define. First and second right angle female flag quick connectors, being mirror images of one another, to provide polarized or right and left hand orientations, are then used to connect to the start and main terminal pins, with the first connector being receivable on only a particular one of the start and main terminal pins and the second connector being receivable on only the other start and main terminal pins.

The motor protector is provided with a female quick connector having a size selected so that it is receivable only on the spade terminal welded to the common pin. The spade terminal is chosen to be slightly smaller than the spade terminals welded to the main and start pins. The female quick connector of the motor protector, according to a feature of the invention, has an arm which, using a solder which melts at a selected temperature, is soldered to a support member which mounts an end of a current carrying thermostat member. The arm is adapted to spring away from the support member and interrupt the circuit in the event that a selected overtemperature occurs thereby melting the solder. Calibration of the opening temperature of the motor protector is provided by a calibration screw aligned with a selected portion of the thermostat member.

In a second embodiment of the invention a pair of protrusions are formed on the motor protector housing adapted to project toward the main and start pins when the motor protector is mounted on its blade terminal in order to prevent placement of polarized female quick connectors on the incorrect pins.

### Brief Description of the Drawings

Fig. 1 is a top view of a typical terminal pin header of a compressor motor;
Fig. 2 is similar to Fig. 1 but shows a typical arrangement of wire leads connected to the terminal pins;
Fig. 3 is a circuit diagram of a typical motor winding system;
Fig. 4 is a top view of a header terminal pin arrangement showing a first embodiment of the present invention with a motor protector shown in cross section;
Fig. 5 is a broken away view of a female flag quick connector used in the Fig. 4 embodiment;
Fig. 6 is a front elevational view of a female quick connector and fail safe spring arm used in the Fig. 4 system;
Fig. 7 is a side view of the Fig. 6 connector, and also showing a portion of the protector housing and thermostatic disc support;
Fig. 8 is a perspective view of a motor protector according to a second embodiment of the system;
Figs. 9 and 10 are a perspective view and a top view respectively, of the Fig. 8 motor protector mounted on the common pin of a compressor; and
Figs. 11 and 12 are respective top and front views of the Fig. 8 motor protector with the cover removed and without the thermostatic disc.

### Description of the Preferred Embodiment

As noted above, Fig. 1 shows a typical glass header 10 which is mounted in a wall of a compressor shell (not shown) comprising start, main and common terminal pins spaced equidistantly from one another and each having a male spade connector welded thereto. Fig. 2 shows a conventional wiring arrangement with electrical leads 12, 14 and 16 connected respectively to the start, main and common terminals through female flag quick connectors in which the lead wire extends laterally from the side of the quick connector and perpendicularly to the longitudinal axis of the connector opening which receives a mating spade connector, i.e. a so called right angle connector. Although the female connectors can very easily be placed over the spade connectors to effect electrical connection it will be seen that it is also very easy to connect a given lead wire to any one of the spade connectors so that miswiring becomes a problem.

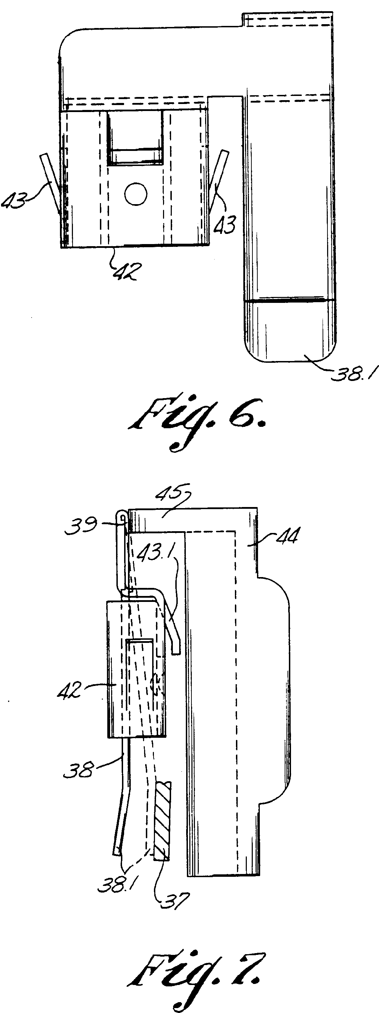

With reference to Fig. 3, a conventional wiring diagram of a motor includes a start device 20, such as a PTC starter as disclosed in U.S. Patent No. 4,241,370, which is coupled across the main winding terminal M and start winding terminal S. A capacitor 22 optionally may be connected in parallel with the start device. Also connected to main winding terminal M is line L₁. A motor protector 24 is connected to common terminal C and to line L₂.

When the motor is energized the start device exhibits low resistance so that both the main and start windings are energized. As the motor reaches running speed the resistance of the start device rises dramatically to, in effect, deenergize the start winding. Should an overcurrent of a selected magnitude occur motor protector 24 will be actuated to open the circuit and deenergize the motor.

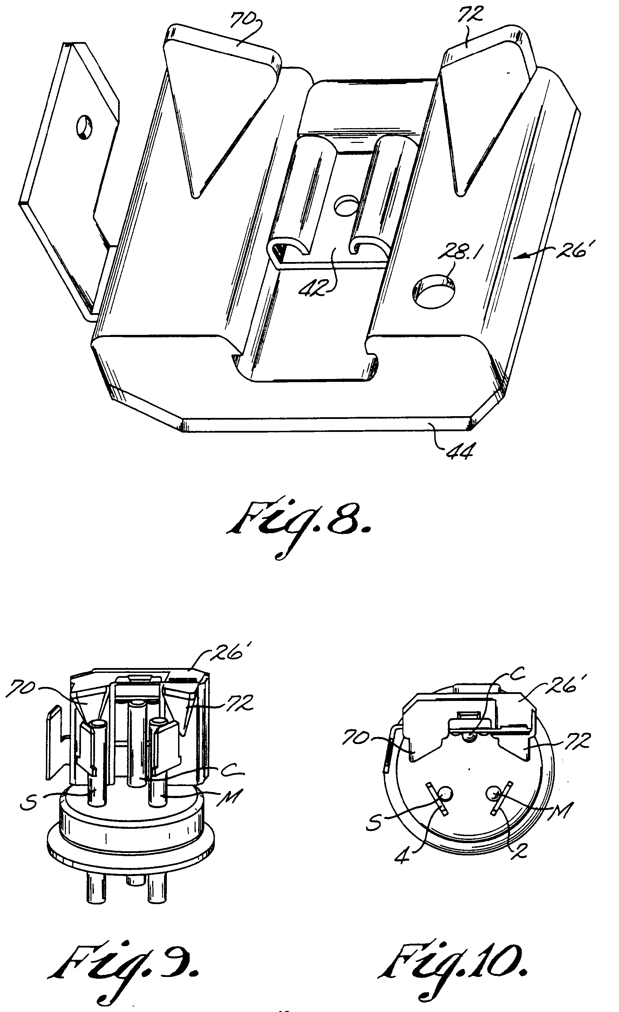

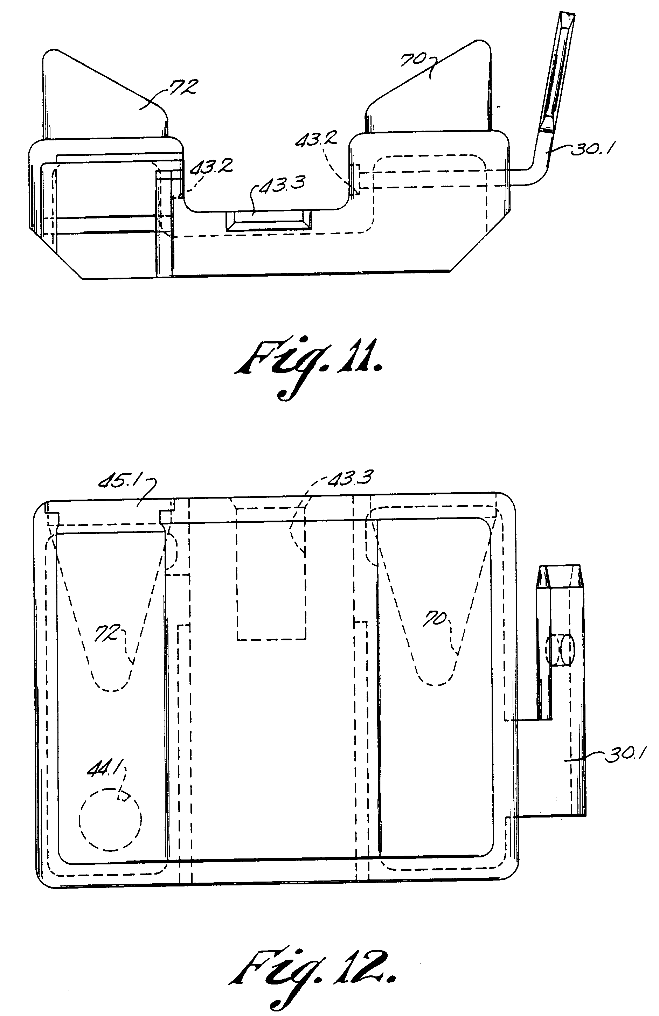

If the lead wires should be connected to the wrong terminal pins the motor will not function as intended. For example, if the main and start connections are reversed the motor may not start. In accordance with the invention the chance of miswiring is obviated. As seen in Fig. 4 a motor protector 26 is generally in the form of a parallelepiped housing having a cup shaped base member 28 with a channel like recess 40 extending along a wall of the base member. A stationary electrical contact 30 is mounted in the base connected to a spade terminal 31 extending out of base member 28 and which is adapted for connection to line L₂. A snap acting bimetallic disc 32 has a movable contact 34 mounted at a free end of the disc and has an opposite end 36 attached, as by welding, to disc support 37, made of suitable electrically and thermally conductive material such as brass. A fail safe spring arm 38 is formed integrally with a female quick connector 42 of electrically conductive material having good spring characteristics, such as beryllium copper. Arm 38 has a coined portion 39 which is bent back on itself as best seen in Fig. 7 and has a distal free end 38.1 formed at a slight angle with the remainder of the arm so that, when biased toward support 37, it is flush therewith as shown in dashed lines in Fig. 7. An aperture 28.1 as shown in Fig. 4, is provided in base 28 so that a probe can be inserted to bias arm 38 into contact with support 37 which is soldered thereto using a solder which melts at a selected temperature. The temperature is selected to prevent damage to the compressor motor upon overheating due to locked rotor conditions or the like in the event that contact 34 does not separate from stationary contact 30 as intended.

Cover 44 received over base member 28 has a leg portion 45 which clamps the coined portion 39 against the closed, front wall of base member 26 to provide a force on arm 38 urging distal end portion 38.1 to move toward the solid line position of Fig. 7. Thus in the event that an overtemperature condition occurs sufficient to melt the solder bond between portion 38.1 and support 37, arm 38 will separate from support 37 to interrupt the circuit and deenergize the motor.

Cover 44, as seen in Fig. 4, mounts a calibrating screw 46 which is adapted to engage the formed portion of disc 32 between the cantilever mounting of the disc and its mid-length close to the mid-length. Displacement of the disc by the screw will lower the temperature at which the disc will snap to an open circuit condition.

Base 28 in cross section is generally U-shaped having a recessed central portion 40 as shown in Fig. 4. Connector 42 is received in recessed portion 40 with tabs 43 and 43.1 received in mating slots in the base member to lock the connector thereto.

The spade terminal 6 welded to pin C is preferably keyed so that the protector can be received only on terminal C. For example, the width of spade 6 could be 0.210'' and the width of spade 2 (main) and spade 4 (start) could be 0.250''.

Connector 42 is disposed so that it is essentially aligned with the bottom wall portion of base member 28 centrally between side walls 48, 50. As seen in Fig. 4, when placed on terminal C the protector housing occupies the majority of the space defined by the pin terminals. That is, an imaginary line joining the three pins defines a given area and the protector housing overlaps a majority of that area. Further, the protector housing intersects the planes in which the spade connectors 2 and 4 attached to pins M and S lie. This arrangement precludes the use of normal right angle female flag quick connectors for terminals M and S due to the fact that the protector housing would interfere with at least one of the lead wires. In accordance with the invention the female flag quick connectors which are intended to be connected to the spade terminals 2 and 4 attached to pins M and S are formed to be mirror images of each other having a right and a left hand lead orientation. That is, one connector 52 has a channel like opening which receives a spade connector along a longitudinal axis and has a lead wire 54 attached to connector 52 so that lead wire 54 extends laterally from side 56 (e.g. right side) of connector 52 and perpendicularly to the longitudinal axis of the opening. A top 58 (Fig. 5) extends over the spade receiving opening so that the spade can be received in the opening only from one direction. Connector 62, on the other hand, has a lead wire 64 attached thereto so that it extends laterally from side 66 (e.g. left side) and perpendicularly to the longitudinal axis of the opening. Connector 62 also is provided with a top portion to close the top end of the spade receiving opening.

Figs. 8-12 show a second embodiment of the invention in which the motor protector has a modified housing which serves the same purpose of preventing miswiring of the terminal pins. Housing 26' comprises the same structure as that shown in Fig. 4 except that a pair of protrusions 70, 72 project outwardly from a wall of the protector. As seen in Figs. 9 and 10 the protector 26' is mounted on the spade terminal attached to pin C with the main portion of the protector housing disposed outside the space defined by the intersection of planes in which two of pins C, M and S lie in contradistinction to the arrangement shown in Fig. 4 where the protector housing occupied the majority of such space. However, protrusions 70, 72 project toward pins S and M respectively and intersect the respective planes in which blade terminal lie to interfere with right angle female connectors placed on spade terminals 2 and 4 of pins M and S which do not have the correct polarization.

It will be appreciated that different forms of connectors can be employed to mount a motor protector on a room air conditioner compressor; however, the female quick connector shown mounted on the male spade terminal 6 offers the advantage of an inherent anti-rotation mechanism. Another advantageous configuration would be a male spade connector extending from the motor protector and a double ended female quick connect can be used to interface between the spade terminal attached to pin C and the spade terminal of the motor protector.

## Claims

1. A single phase motor hermetically sealed inside compressor housing having a header (10) mounted in a wall of the housing, with first (S), second (M) and third (C) terminal pins for providing electrical connection to the motor mounted in the header so as to be equidistant from one another and forming an imaginary triangle, the pins extending from inside to outside the housing, inside the housing the first pin (S) being connected to the start winding of the motor, the second pin (M) being connected to the main winding of the motor and the third pin (C) being connected to common, a spade terminal (2,4,6) welded to each pin outside the housing, and a motor protector (26) having a housing (28) and having a spade receiving terminal (42), characterized in that the motor protector (26) is adapted to be mounted on the header (10) with the spade terminal (6) connected to the third pin received in the spade receiving terminal (42) with the housing (18) extending from the third pin towards the first and second pins and occupying a majority of the space defined by the imaginary triangle, and first and second spade receiving quick connectors (52,62), each connector having a channel like opening that is opened at the bottom only for reception of a spade terminal and a wire lead (54,64) connected thereto and extending generally laterally from a side thereof and generally perpendicularly to the longitudinal axis of the pin, the connectors having their leads extending in mirror image to one another to provide polarized right and left orientated connectors, whereby when the motor protector is received on the third pin the first spade receiving quick connector is receivable on only a particular one of the first and second pins and the second spade receiving quick connector is receivable on only the other of the first and second pins.

2. A single phase motor according to claim 1 in which the spade terminals (2,4,6) welded to the pins each lie in a plane and the protector housing intersects the planes in which the spade connectors (2,4) attached to the first (S) and second (M) pins lie.

3. A single phase motor according to claim 1 or claim 2 in which the motor protector has a cup-shaped base member (28), a channel-like opening (40) extending along a wall of the base member (28), a stationary contact (30) mounted in the base member, a snap-acting thermostatic disc (32) having a movable contact (34) mounted thereon adapted to move into or out of engagement with the stationary contact (30), a combination connector/spring member having a connector end received in the channel-like opening (40) and the spring member extending through an opening in a wall of the base member into the interior of the base member (28), the connector/spring member having an elongated arm (38) with a distal free end (38.1), a support member (37) received in the base member (28) having a first surface on which the snap-acting thermostatic disc (32) is mounted and a second surface to which the distal free end (38.1) is soldered using a solder which melts at a selected temperature, a cover (44) received on the base (28), the cover having a leg portion (45) which clamps the spring arm (38) placing a bias in it tending to separate the distal end (38.1) from the second surface.

4. A single phase motor according to claim 3 in which the motor protector (26) includes a calibration screw (46) movably adjustable to selectively deform the thermostatic disc (32) to adjust the opening temperature of the disc (32).

5. A single phase motor hermetically sealed inside compressor housing having a header (10) mounted in a wall of the housing, with first (S), second (M) and third (C) terminal pins for providing electrical connection to the motor mounted in the header so as to be equidistant from one another and forming an imaginary triangle, the pins extending from inside to outside the housing, inside the housing the first pin (S) being connected to the start winding of the motor, the second pin (M) being connected to the main winding of the motor and the third pin (C) being connected to common, a spade terminal (2,4,6) welded to each pin outside the housing, the spade terminals each lying in a plane with the planes intersecting one another and with the header to form an equilateral triangle on a surface of the header and a motor protector (26') having a housing (44) and having a spade receiving terminal (42), characterized in that the motor protector (26') is adapted to be mounted on the header with the spade terminal (6) connected to the third pin received in the spade receiving terminal (42) of the protector, the protector also having a pair of protrusions (70,72) extending from the housing (44) towards the first and second pins respectively, intersecting the planes in which the spade terminals (2,4) attached to the first and second pins lie, and first and second spade receiving quick connectors, each connector having a channel like opening that is opened at the bottom only for reception of a spade terminal and a wire lead connected thereto and extending generally laterally from a side thereof and generally perpendicularly to the longitudinal axis of the pin, the connectors having their leads extending in mirror image to one another to provide polarized right and left orientated connectors, whereby when the motor protector is received on the third pin the first spade receiving quick connector is receivable on only a particular one of the first and second pins and the second spade receiving quick connector is receivable on only the other of the first and second pins.

## Patentansprüche

1. Hermetisch im Inneren eines Kompressorgehäuses mit einem in einer Wand des Gehäuses montierten Sockel (10) abgedichteter Einphasenmotor, wobei ein erster (S), ein zweiter (M) und ein dritter Anschlußstift (C) zum Herstellen einer elektrischen Verbindung mit dem Motor in dem Sockel so angebracht sind, daß sie voneinander gleich weit entfernt sind und ein gedachtes Dreieck bilden, wobei sich die Stifte vom Inneren des Gehäuses nach außen erstrecken, der erste Stift (S) innerhalb des Gehäuses mit der Startwicklung des Motors verbunden ist, der zweite Stift (M) mit der Hauptwicklung des Motors verbunden ist und der dritte Stift (C) mit Schaltungsnull verbunden ist, einem an jeden Stift außerhalb des Gehäuses geschweißten Flachstecker (2, 4, 6), sowie einer Motorschutzvorrichtung (26) mit einem Gehäuse (28) und einer Flachsteckerbuchse (42), dadurch gekennzeichnet, daß die Motorschutzvorrichtung (26) an dem Sockel (10) montiert sein kann, wobei der Flachstecker (6) mit dem in der Flachsteckerbuchse (42) aufgenommenen dritten Stift verbunden ist, wobei sich das Gehäuse (18) von dem dritten Stift zu dem ersten und dem zweiten Stift erstreckt und den größten Teil des durch das gedachte Dreieck gebildeten Raums einnimmt, sowie mit einem ersten und einem zweiten Flachsteckerbuchsen-Schnellverbinder (52, 62), wobei jeder Verbinder eine kanalartige Öffnung, die am Boden nur für die Aufnahme eines Flachsteckers geöffnet ist, sowie eine damit verbundene Drahtleitung (54, 64) aufweist, die sich allgemein seitlich von einer Seite und allgemein senkrecht zu der Längsachse des Stifts erstreckt, wobei sich die Leitungen der Verbinder zueinander spiegelbildlich erstrecken, um gepolte, rechts- und links- orientierte Verbinder bereitzustellen, wodurch dann, wenn die Motorschutzvorrichtung an dem dritten Stift aufgenommen ist, der erste Flachsteckerbuchsen-Schnellverbinder nur an einem bestimmten aus dem ersten und dem zweiten Stift aufgenommen werden kann und der zweite Flachsteckerbuchsen-Schnellverbinder nur an dem anderen aus dem ersten und dem zweiten Stift aufgenommen werden kann.

2. Einphasenmotor nach Anspruch 1, bei dem die an die Stifte geschweißten Flachstecker (2, 4, 6) jeweils in einer Ebene liegen und das Schutzvorrichtungsgehäuse die Ebenen schneidet, in denen die an dem ersten (S) und dem zweiten Stift (M) befestigten Flachstecker (2, 4) liegen.

3. Einphasenmotor nach Anspruch 1 oder 2, bei dem die Motorschutzvorrichtung ein becherförmiges Basiselement (28) aufweist, eine sich längs einer Wand des Basiselements (28) erstreckende, kanalartige Öffnung (40), einen in dem Basiselement (28) montierten, stationären Kontakt (30), eine Thermostatscheibe (32) mit Schnappwirkung, an der ein beweglicher Kontakt (34) montiert ist, der mit dem stationären Kontakt (30) in und außer Eingriff gelangen kann, wobei bei einer Kombination aus Verbinder und Federelement ein Verbinderende in der kanalartigen Öffnung (40) aufgenommen ist und sich das Federelement durch eine Öffnung in einer Wand des Basiselements ins Innere des Basiselements (28) erstreckt, wobei das Verbinder/Federelement einen länglichen Arm (38) mit einem fernen freien Ende (38.1) aufweist, wobei ein in dem Basiselement (28) aufgenommenes Stützelement (37) eine erste Fläche aufweist, an der die Thermostatscheibe (32) mit Schnappwirkung angebracht ist, sowie eine zweite Fläche, an die das ferne freie Ende (38.1) unter Verwendung eines Lots gelötet ist, das bei einer ausgewählten Temperatur schmilzt, eine an der Basis (28) aufgenommene Abdeckung (44), wobei die Abdekkung einen Schenkelabschnitt (45) aufweist, der den Federarm (38) einklemmt und ihm dabei eine Vorspannung verleiht, die dazu neigt, das distale Ende (38.1) von der zweiten Fläche zu trennen.

4. Einphasenmotor nach Anspruch 3, bei dem die Motorschutzvorrichtung (26) eine Kalibrierschraube (46) aufweist, die beweglich einstellbar ist, um die Thermostatscheibe (32) zum Einstellen der Öffnungstemperatur der Scheibe (32) einzustellen.

5. Hermetisch im Inneren eines Kompressorgehäuses mit einem in einer Wand des Gehäuses montierten Sockel (10) abgedichteter Einphasenmotor, wobei ein erster (S), ein zweiter (M) und ein dritter Anschlußstift (C) zum Herstellen einer elektrischen Verbindung mit dem Motor in dem Sockel so montiert sind, daß sie voneinander gleich weit entfernt sind und ein gedachtes Dreieck bilden, wobei sich die Stifte vom Inneren des Gehäuses nach außen erstrecken, der erste Stift (S) innerhalb des Gehäuses mit der Startwicklung des Motors verbunden ist, der zweite Stift (M) mit der Hauptwicklung des Motors verbunden ist und der dritte Stift (C) mit Schaltungsnull verbunden ist, einem an jeden Stift außerhalb des Gehäuses geschweißten Flachstecker (2, 4, 6), wobei die Flachstecker jeweils in einer Ebene liegen, wobei die Ebenen einander und den Sockel schneiden, so daß sie ein gleichseitiges Dreieck an einer Fläche des Sockels bilden, und mit einer Motorschutzvorrichtung (26') mit einem Gehäuse (44) und einer Flachsteckerbuchse (42), dadurch gekennzeichnet, daß die Motorschutzvorrichtung (26') an dem Sockel montiert sein kann, wobei der Flachstecker (6) mit dem in der Flachsteckerbuchse (42) der Schutzvorrichtung aufgenommenen dritten Stift verbunden ist, wobei die Schutzvorrichtung auch zwei Vorsprünge (70, 72) aufweist, die sich von dem Gehäuse (44) zu dem ersten bzw. zu dem zweiten Stift erstrecken und die Ebenen schneiden, in denen die an dem ersten und dem zweiten Stift befestigten Flachstecker (2, 4) liegen, sowie einen ersten und einen zweiten Flachsteckerbuchsen-Schnellverbinder, wobei jeder Verbinder eine kanalartige Öffnung, die am Boden nur für die Aufnahme eines Flachsteckers geöffnet ist, sowie eine damit verbundene Drahtleitung aufweist, die sich allgemein seitlich von einer Seite und allgemein senkrecht zu der Längsachse des Stifts erstreckt, wobei sich die Leitungen der Verbinder zueinander spiegelbildlich erstrecken, um gepolte, rechts- und linksorientierte Verbinder bereitzustellen, wodurch dann, wenn die Motorschutzvorrichtung an dem ersten Stift aufgenommen ist, der erste Flachsteckerbuchsen-Schnellverbinder nur an einem bestimmten aus dem ersten und dem zweiten Stift aufgenommen werden kann und der zweite Flachsteckerbuchsen-Schnellverbinder nur an dem anderen aus dem ersten und dem zweiten Stift aufgenommen werden kann.

## Revendications

1. Moteur monophasé enfermé hermétiquement dans un boîtier de compresseur ayant un collecteur (10) monté dans une paroi du boîtier, avec des première (S), seconde (M) et troisième (C) broches de bornes destinées à assurer la connexion électrique avec le moteur, montées dans le collecteur afin qu'elles soient équidistantes les unes autres et forment un triangle imaginaire, les broches dépassant de l'intérieur à l'extérieur du boîtier, la première broche (S) étant connectée à l'enroulement de démarrage du moteur, la seconde broche (M) étant connectée à l'enroulement principal du moteur et la troisième broche (C) étant connectée à la borne commune à l'intérieur du boîtier, une borne mâle (2, 4, 6) à lame soudée à chaque broche à l'extérieur du boîtier, et un dispositif protecteur (26) de moteur ayant un boîtier (28) et ayant une borne (42) de logement de lame, caractérisé en ce que le dispositif protecteur (26) de moteur est destiné à être monté sur le collecteur (10) avec la borne à lame (6) connectée à la troisième broche logée dans la borne (42) de logement de lame, le boîtier (18) dépassant de la troisième broche vers la première et la seconde broches et occupant la plus grande partie de l'espace délimité par le triangle imaginaire, et un premier et un second connecteurs rapides (52, 62) de logement de lame, chaque connecteur ayant une ouverture en forme de canal qui débouche à la partie inférieure uniquement pour le logement d'une borne à lame et un fil d'alimentation (54, 64) qui lui et connecté et qui dépasse de façon générale en direction latérale d'un côté et en direction perpendiculaire de façon générale à l'axe longitudinal de la broche, les connecteurs ayant leur fil d'alimentation disposé sous forme d'une image spéculaire l'un de l'autre afin qu'ils forment des connecteurs polarisés orientés à droite et à gauche, si bien que, lorsque le dispositif protecteur du moteur est logé sur la troisième broche, le premier connecteur rapide de logement de lame peut se loger uniquement sur la broche particulière parmi les première et seconde broches, et le second connecteur rapide de logement de lame peut se loger uniquement sur l'autre des première et seconde broches.

2. Moteur monophasé selon la revendication 1, dans lequel les bornes (2, 4, 6) à lame soudées aux broches sont disposées chacune dans un plan, et le boîtier du dispositif protecteur recoupe les plans dans lesquels se trouvent les connecteurs (2, 4) à lame qui sont fixés à la première (S) et à la seconde (M) broches.

3. Moteur monophasé selon la revendication 1 ou 2, dans lequel le dispositif protecteur du moteur a un organe de base (28) en forme de cuvette, une ouverture (40) en forme de canal disposée le long d'une paroi de l'organe de base (28), un contact fixe (30) monté dans l'organe de base, un disque thermostatique (32) à déclenchement élastique, ayant un contact mobile (34) monté sur lui et destiné à se déplacer afin qu'il soit en coopération avec le contact fixe (30) ou à distance de celui-ci, un organe combiné formant connecteur et ressort ayant une extrémité de connecteur logée dans l'ouverture en forme de canal (40) et l'organe à ressort passant par une ouverture d'une paroi de l'organe de base à l'intérieur de l'organe de base (28), l'organe formant connecteur et ressort ayant un bras allongé (38) qui a lui même une extrémité externe libre (38.1), un organe de support (37) logé dans l'organe de base (28) ayant une première surface sur laquelle est monté le disque thermostatique (32) à enclenchement élastique et une seconde surface à laquelle est soudée l'extrémité libre externe (38.1) avec une soudure d'apport qui fond à une température choisie, un couvercle (44) logé sur la base (28), le couvercle ayant une partie de branche (45) qui serre le bras élastique (38) et lui fait subir une force de rappel tendant à séparer l'extrémité externe (38.1) de la seconde surface.

4. Moteur monophasé selon la revendication 3, dans lequel le dispositif protecteur (26) de moteur comprend une vis d'étalonnage (46) ajustable de manière mobile afin qu'elle déforme sélectivement le disque thermostatique (32) pour l'ajustement de la température d'ouverture du disque (32).

5. Moteur monophasé enfermé hermétiquement dans un boîtier de compresseur ayant un collecteur (10) monté sur une paroi du boîtier, des première (S), seconde (M) et troisième (C) broches de bornes étant destinées à assurer une connexion électrique avec le moteur et montées dans le collecteur afin qu'elles soient équidistantes les unes des autres et forment un triangle imaginaire, les broches dépassant de l'intérieur vers l'extérieur du boîtier, la première broche (S) étant connectée à l'enroulement de démarrage du moteur, la seconde broche (M) étant connectée à l'enroulement principal du moteur et la troisième broche (C) étant connectée à une borne commune à l'intérieur du boîtier, une borne (2, 4, 6) à lame soudée à chaque broche à l'extérieur du boîtier, les bornes à lame se trouvant chacune dans un plan tel que les plans se recoupent mutuellement et recoupent le collecteur en formant un triangle équilatéral sur une surface du collecteur, et un dispositif protecteur de moteur (26') ayant un boîtier (44) et ayant une borne (42) de logement de lame, caractérisé en ce que le dispositif protecteur (26') de moteur est destiné à être monté sur le collecteur avec la borne à lame (6) connectée à la troisième broche logée dans la borne (42) de logement de lame du dispositif protecteur, le dispositif protecteur ayant aussi une paire de saillies (70, 72) dépassant du boîtier (44) vers la première et la seconde broches respectivement, recoupant les plans dans lesquels se trouvent les bornes à lame (2, 4) qui sont fixées à la première et à la seconde broches, et un premier et un second connecteurs rapide de logement de lame, chaque connecteur ayant une ouverture en forme de canal qui débouche à la partie inférieure uniquement pour la réception d'une borne à lame et d'un fil d'alimentation qui lui est connecté et qui dépasse en direction générale latérale d'un côté et en direction générale perpendiculaire à l'axe longitudinal de la broche, les connecteurs ayant leur fil d'alimentation qui dépasse sous forme d'images spéculaires afin que les connecteurs soient polarisés avec une orientation à droite et à gauche, si bien que, lorsque le dispositif protecteur du moteur est logé sur la troisième broche, le premier connecteur rapide de logement de lame peut être logé uniquement sur une broche particulière parmi la première et la seconde broches et le second connecteur rapide de logement de lame peut être logé uniquement sur l'autre des première et seconde broches.
